(19) Europäisches Patentamt
European Patent Office
Office européen des brevets

(11) EP 0 615 988 B1

(12) # EUROPÄISCHE PATENTSCHRIFT

(45) Veröffentlichungstag und Bekanntmachung des Hinweises auf die Patenterteilung:
**03.09.1997 Patentblatt 1997/36**

(51) Int Cl.6: **C08G 18/08**, C09J 175/04

(21) Anmeldenummer: **94103350.8**

(22) Anmeldetag: **05.03.1994**

(54) **Verwendung von wässrigen Polyurethandispersionen als Verbundfolienklebstoff**

Use of aqueous polyurethane dispersions as an adhesive for composite films

Utilisation de dispersions aqueuses de polyuréthane comme adhésifs pour feuilles composites

(84) Benannte Vertragsstaaten:
**BE DE ES FR GB IT NL SE**

(30) Priorität: **13.03.1993 DE 4308079**

(43) Veröffentlichungstag der Anmeldung:
**21.09.1994 Patentblatt 1994/38**

(73) Patentinhaber: **BASF Aktiengesellschaft**
**67063 Ludwigshafen (DE)**

(72) Erfinder:
- **Fricke, Hans-Joachim**
**D-67246 Dirmstein (DE)**
- **Haeberle, Karl, Dr.**
**D-67346 Speyer (DE)**
- **Maempel, Lothar, Dr.**
**D-68782 Bruehl (DE)**
- **Peikert, Fritz**
**D-67227 Frankenthal (DE)**
- **Wistuba, Eckehardt, Dr.**
**D-67098 Bad Duerkheim (DE)**

(56) Entgegenhaltungen:
**EP-A- 0 498 218** **DE-B- 2 660 346**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 615 988 B1

**Beschreibung**

Die Erfindung betrifft eine Verwendung von wäßrigen Polyurethandispersionen als Klebstoff, insbesondere Verbundfolienklebstoff.

Durch die Verklebung bzw. Kaschierung von Folien aus unterschiedlichen Werkstoffen werden Eigenschaften dieser Werkstoffe kombiniert. Ziel einer solchen Maßnahme kann es sein, besondere dekorative Effekte zu erreichen, oder technische Effekte wie Schutz eines Aufdrucks, Erzeugung kochfester Folienverbunde, Unterbindung der Dampfdiffusion, Heißsiegelbarkeit, zuverlässige Vermeidung der Porigkeit oder Beständigkeit gegen aggressive Güter zu bewirken. Die Folienwerkstoffe, die im wesentlichen eingesetzt werden, sind Polyethylen, Polypropylen, insbesondere biaxial gerecktes Polypropylen, Polyamid, Polyester, PVC, Celluloseacetat, Zellglas und Metalle wie Zinn oder Aluminium.

Bei üblicherweise eingesetzten Kaschierklebern handelt es sich z.B. um in organischen Lösungsmitteln gelöste Bindemittel, bzw. Bindemittelsysteme, welche durch Reaktionen von Polyisocyanatverbindungen mit Hydroxygruppen tragenden Polyestern oder Polyethern oder unter Einwirkung von Wasser auf Polyisocyanatverbindungen vernetzen.

Als Lösungsmittel werden in der Regel Benzin, Toluol, Aceton und Ethylacetat eingesetzt. Die Verwendung derartiger Lösungen als Kaschierkleber ist jedoch problematisch und technisch aufwendig, da wegen der Feuergefährlichkeit dieser Lösungsmittel explosionsgeschützte Beschichtungsanlagen eingesetzt werden müssen und Vorrichtungen für die Rückgewinnung der Lösungsmittel erforderlich sind. Ferner beeinträchtigen Restlösungsmittel in den Verbundlaminaten die einzupackenden Füllgüter durch Geschmacks- und Geruchsbeeinflussung.

Bei diesen Systemen handelt es sich im allgemeinen um 2-Komponentensysteme, da die reaktiven Komponenten zur Vermeidung vorzeitiger Vernetzungsreaktionen erst kurz vor der Verwendung gemischt werden können.

Die Verwendung von wäßrigen Polyurethandispersionen als Klebstoff, auch als Kaschierklebstoff ist bereits aus der DE-A-14 95 745 bekannt. Jedoch ergeben bisher bekannte Polyurethandispersionen ohne Vernetzerzusatz keine ausreichende Verbundfestigkeit. Mit Vernetzerzusatz ist es wiederum nur schwer möglich, den Verbund zum Recycling der Materialien wieder zu lösen. Durch Zusatz von Vernetzern, z.B. Isocyanatvernetzern wird die Lagerstabilität beeinträchtigt, d.h. die Topfzeit der Dispersionen verkürzt.

Aus der EP-A-441 196 sind wäßrige Dispersionen von Polyurethanen mit geringem Harnstoffgehalt, welche aus Diisocyanaten , zweiwertigen Polyetheralkoholen und Dimethylolpropionsäure aufgebaut sind, bekannt. Die dort beschriebenen Dispersionen werden zur Beschichtung von Leder verwendet.

Aufgabe der vorliegenden Erfindung waren daher einkomponentige Polyurethandispersionen, welche sich als Klebstoff, insbesondere Verbundklebstoff, eignen und eine hohe Verbundfestigkeit bewirken. Bei hohen Temperaturen soll der Verbund wieder auftrennbar sein, um ein Recycling der einzelnen Materialien zu ermöglichen.

Die Aufgabe wurde gelöst durch die Verwendung von wäßrigen Dispersionen, enthaltend ein Polyurethan mit einem Gehalt von Harnstoffgruppen

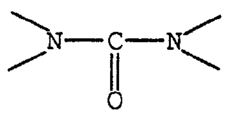

unter 0,6 Gew.-%, bezogen auf das Polyurethan, als Klebstoff.

Das Polyurethan, welches erfindungsgemäß in Form einer wäßrigen Dispersion als Klebstoff verwendet wird, weist als Aufbaukomponenten im wesentlichen organische Isocyanatverbindungen a) oder eine arithmetisch mittlere NCO-Funktionalität von 1,9 bis 2,3 aufweisende Gemische aus organischen Isocyanatverbindungen, Dihydroxyverbindungen b) mit einem Molekulargewicht über 500 bis 5000 g/mol, die keine ionischen Gruppen oder in ionische Gruppen überführbare Gruppen enthalten, ein- bis dreiwertige Alkohole mit einer ionischen Gruppe oder in eine ionischen Gruppe überführbaren Gruppe c) und gegebenenfalls zweiwertige Alkohole d) eines zahlenmittleren Molekulargewichtes von 62 bis 500 oder ein eine arithmetisch mittlere Funktionalität an alkoholischen OH-Gruppen von 1,9 bis 2,3 aufweisendes Gemisch aus Alkoholen eines zahlenmittleren Molekulargewichtes von 62 bis 500, welche keine ionische oder in eine ionische Gruppe überführbare Gruppe enthalten, sowie gegebenenfalls einwertige Polyetheralkohole e) auf.

Als organische Isocyanatverbindungen kommen sowohl aliphatische, aromatische als auch araliphatische Diisocyanate wie Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, 1-Isocyanato-3,3,5-trimethyl-5-isocyanatomethylcyclohexan(Isophorondiisocyanat), 2,4-Diisocyanatotoluol, 2,6-Diisocyanatotoluol, Tetramethylxylylendiisocyanat, 1,4-Diisocyanatobenzol, cyanatodiphenylmethan, p-Xylylendiisocyanat, sowie dimethyltoluylendiisocyanat in Betracht. Ferner können auch von diesen Diisocyanaten abgeleitete, gegebenenfalls höherfunktionelle, Carbodiimid-, Allophanat-, Isocyanurat-, Urethan- und/oder Biuretgruppen enthaltenden Polyisocyanate sowie Monoisocyanate wie Phenylisocyanat, Cyclohexylisocyanat, Hexylisocyanat oder Dodecylisocyanat eingesetzt werden.

Vorzugsweise handelt es sich bei den Isocyanatverbindungen a) um Diisocyanate, insbesondere um 2,4- und 2,6-Diisocyanatotoluol und deren Gemische, Hexamethylendiisocyanat, 1-Isocyanato-3,3,5-trimethyl-5-isocyanatomethylcyclohexan und 4,4'-Di-(isocyanatocyclohexyl)-methan. Für die Herstellung von unter Lichteinwirkung nicht vergilbenden Produkten werden vorzugsweise aliphatische Isocyanatverbindungen eingesetzt.

Geeignete Dihydroxylverbindungen (b) mit einem Molekulargewicht über 500 bis 5000 sind die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Bevorzugt eingesetzte Dihydroxylverbindungen sind zweiwertige Polyetheralkohole wie sie z.B. durch Polymerisation von Ethylenoxid, Propylenoxid, Butylenoxid, Tetrahydrofuran, Styroloxid oder Epichlorhydrin mit sich selbst, z. B. in Gegenwart von Bortrifluorid, oder durch Anlagerung dieser Verbindungen, gegebenenfalls im Gemisch oder nacheinander, an Startkomponenten mit reaktionsfähigen Wasserstoffatomen, wie Amine oder Alkohole, erhältlich sind. Besonders geeignet sind als Monomere II Polyetherdiole, die wenigstens zu 70 Gew.-% gleiche oder verschiedene Einheiten der Struktur

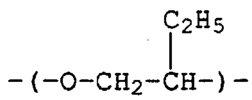 , 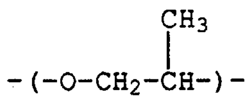 oder $-(-O-(CH_2)_4-)-$

enthalten.

Der Anteil der Dihydroxyverbindungen b) beträgt vorzugsweise 0,2 bis 0,8, besonders bevorzugt 0,3 bis 0,6 Äquivalent OH-Gruppen, bezogen auf 1 Äquivalent NCO-Gruppen der Verbindungen a).

Aufbaukomponente (c) enthält ionische Gruppen bzw. in ionische Gruppen überführbare Gruppen, um die Dispergierbarkeit des Polyurethans in Wasser zu gewährleisten. Ihr Anteil beträgt üblicherweise 0,2 bis 0,8 Grammäquivalent, vorzugsweise 0,3 bis 0,7 Grammäquivalent, bezogen auf 1 Mol Isocyanatgruppen.

Als in ionische Gruppen überführbare Gruppen seien insbesondere Carbonsäuregruppen, Sulfonsäuregruppen und tertiäre Aminogruppen genannt.

Als Aufbaukomponenten c) werden vorzugsweise 4 bis 10 C-Atome enthaltende Dihydroxycarbon- oder -sulfonsäuren eingesetzt. Besonders bevorzugt sind 5 bis 10 C-Atome enthaltende Dihydroxycarbonsäuren der allgemeinen Formel

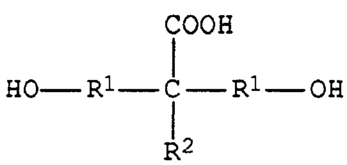 ,

wobei $R^1$ eine Alkylen- und $R^2$ eine Alkylgruppe ist, insbesondere Dimethylolpropionsäure.

Zur Überführung von potentiellen anionischen Gruppen, z.B. Carbonsäuregruppen oder Sulfonsäuregruppen in Ionengruppen können anorganische und/oder organische Basen wie Natriumhydroxyd, Kaliumhydroxyd, Kaliumcarbonat, Natriumhydrogencarbonat, Ammoniak oder Primäre, sekundäre und besonders tertiäre Amine, z.B. Triethylamin oder Dimethylaminpropanol eingesetzt werden.

Zur Überführung der potentiellen kationischen Gruppen, z.B. der tertiären Aminogruppen in die entsprechenden Kationen, z.B. Ammoniumgruppen, sind als Neutralisationsmittel anorganische Säuren, z.B. Salzsäure, Essigsäure, Fumarsäure, Maleinsäure, Milchsäure, Weinsäure, Oxalsäure oder Phosphorsäure oder als Quarternierungsmittel, z. B. Methylchlorid, Methyljodid, Dimethylsulfat, Benzylchlorid, Chloressigethylester oder Bromacetamid geeignet. Weitere geeignete Neutralisations- und Quaternierungsmittel sind z.B. in der US-PS 3 479 310, Spalte 6, beschrieben.

Die Neutralisation bzw. Quaternisierung der ionischen oder der potentiell ionischen Gruppen kann vor, während und insbesondere nach der Isocyanat-Polyadditionsreaktion erfolgen.

Aufbaukomponenten d) sind z.B. 1,2-Ethandiol, 1,2- und 1,3-Propandiol, Butandiole, 1,4-Butendiol, 1,4-Butindiol, Pentandiole, Hexandiole, Octandiole, 1,4-Bishydroxymethylcyclohexan, 2,2-Bis-(4-hydroxycyclohexyl)-propan, 2-Methyl-1,3-propandiol, Glycerin, Trimethylolpropan, 1,2,6-Hexantriol, 1,2,4-Butantriol, Pentaerythrit, Sorbit, Diethylenglykol, Triethylenglykol, Tetraethylenglykol, Dipropylenglykol oder Dibutylenglykol.

In Gemischen der Aufbaukomponenten d) können auch ein oder mehr als zweiwertige Alkohole mitverwendet werden. Vorzugsweise werden jedoch zweiwertige Alkohole d) eingesetzt.

Der Anteil der Verbindungen d) beträgt vorzugsweise 0 bis 0,4 Äquivalente OH bezogen auf 1 Äquivalent OCN.

Als gegebenenfalls mitzuverwendende Verbindungen e) sind solche einwertigen Polyetheralkohole von besonderem Interesse, deren zahlenmittleres Molekulargewicht ($\bar{M}_n$) 500 bis 10.000, vorzugsweise 1000 bis 5000 beträgt. Sie sind beispielsweise durch Alkoxylierung von einwertigen Alkanolen wie Methanol, Ethanol oder n-Butanol erhältlich, wobei als Alkoxylierungsmittel z.B. Ethylenoxid oder Propylenoxid verwendet werden. Vorzugsweise beträgt der Ethoxylierungsgrad der Monomeren V mehr als 60 Gew.-%.

Als weitere Aufbaukomponenten kommen in geringen Mengen auch Verbindungen mit primären oder sekundären Aminogruppen in Betracht, welche mit Isocyanat zu Harnstoffgruppen reagieren.

Harnstoffgruppen entstehen auch durch Reaktion von Isocyanatgruppen mit Wasser zu Aminen und anschließende Umsetzung der Amine mit weiteren Isocyanatgruppen zu Harnstoffgruppen. Um eine solche Harnstoffbildung zu vermeiden, werden die Aufbaukomponenten vorzugsweise in solchen Mengen eingesetzt, daß die Isocyanatgruppen weitgehend mit Hydroxylgruppen umgesetzt werden.

Vorzugsweise steht die Gesamtzahl aller OH-Äquivalente der Aufbaukomponenten b) bis e) zu den OCN-Äquivalenten im Verhältnis 0,94 : 1 bis 1,02 : 1. Besonders bevorzugt ist das Verhältnis 1 : 1.

Der Harnstoffgruppengehalt im Polyurethan überschreitet insgesamt 0,6 Gew.-%, vorzugsweise 0,3 Gew.-% und besonders bevorzugt 0,2 Gew.-%, nicht und soll ganz besonders bevorzugt nahe oder bei 0 liegen.

Die Herstellung der wäßrigen Polyurethandispersionen erfolgt zweckmäßigerweise so, daß man die Aufbaukomponenten in der Schmelze oder in Gegenwart eines inerten, mit Wasser mischbaren Lösungsmittels wie Aceton, Tetrahydrofuran, Butanon oder N-Methylpyrrolidon bei Temperaturen von 20 bis 160, bevorzugt 50 bis 100°C umsetzt. Durch die Mitverwendung von in an sich bekannter Weise katalytisch wirksamen Substanzen wie Dibutylzinndilaurat, Zinn-(II)-octoat oder 1,4-Diazobicyclo-(2,2,2)-octan, normalerweise in Mengen von 10 bis 1000 ppm bezogen auf das Polyurethan, kann die Umsetzung beschleunigt werden. Anschließend wird gegebenenfalls mit einem mit Wasser mischbaren Lösungsmittel verdünnt, in ionische Gruppen überführbare Gruppen der Aufbaukomponenten c) durch Neutralisation oder Quaternisierung gegebenenfalls ionisiert, sowie Wasser zugegeben.

Danach werden üblicherweise die gegebenenfalls mitverwendeten organischen Lösungsmittel abdestilliert, weshalb solche Lösungsmittel bevorzugt sind, deren Siedepunkt unterhalb des Siedepunktes von Wasser liegt. Werden Aufbaukomponenten mit primären oder sekundären Aminogruppen in das Polyurethan V miteingebaut, so erfolgt ihre Zugabe zu deren erhaltenen wäßrigen Reaktionsmischung, vorzugsweise durch Einrühren bei Temperaturen von 20 bis 50°C. Die zugegebene Wassermenge wird üblicherweise so bemessen, daß die erfindungsgemäßen wäßrigen Polyurethanzubereitungen einen Feststoffgehalt von 10 bis 60 Gew.-% aufweisen. Die in den Zubereitungen enthaltenen Polyurethane weisen in N,N-Dimethylformamid (DMF) in der Regel einen K-Wert von 20 bis 60 auf.

Der K-Wert ist eine relative Viskositätszahl, die in Analogie zur DIN 53 726 bei 25° bestimmt wird. Er enthält die Fließgeschwindigkeit einer 1 gew.-%igen Lösung des Polyurethans in DMF, relativ zur Fließgeschwindigkeit von reinem DMF und charakterisiert das mittlere Molekulargewicht des Polyurethans.

Für die erfindungsgemäße Verwendung als Klebstoff, insbesondere als Kaschierklebstoff, können die Dispersionen z.B. noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Bei der Verwendung als Kaschierklebstoff werden im allgemeinen flächige Substrate, z.B. Folien mit Papier oder Karton verklebt. Besonders eignen sich die Polyurethandispersionen als Klebstoff zu Herstellung von Verbundfolien, wobei, wie bereits eingangs beschrieben, unterschiedliche Folien zu verschiedenen Zwecken miteinander verklebt werden.

Die Folienwerkstoffe, die im wesentlichen eingesetzt werden, sind Polyethylen, Polypropylen, insbesondere biaxial gerecktes Polypropylen, Polyamid, Polyester, PVC, Celluloseacetat, Zellglas und Metalle wie Zinn und Aluminium.

Die Polymerfolien, insbesondere Polyolefinfolien, können gegebenenfalls coronavorbehandelt sein.

Die Polyurethandispersion wird auf mindestens eines im allgemeinen nur auf eines der zu verklebenden Substrate aufgetragen. Die beschichteten Substrate werden im allgemeinen kurz getrocknet und dann vorzugsweise bei einer Temperatur von 30 bis 80°C miteinander bzw. mit unbeschichteten Substraten verpreßt.

Die erhaltene Verklebung, insbesondere der erhaltene Folienverbund hat bei Raumtemperatur eine hohe Verbundfestigkeit, wie sonst im allgemeinen nur bei zweikomponentigen Systemen unter Verwendung eines Vernetzers zu erreichen ist.

Bei hohen Temperaturen, ca. ab 60°C wird die Verbundfestigkeit geringer. Ab ca. 100°C, z.B. in kochendem Wasser, lassen sich die Verbunde im allgemeinen wieder gut trennen. Auf diese Weise wird ein getrenntes Recycling der unterschiedlichen Folien im Verbund ermöglicht.

Eine Erhöhung der Verbundfestigkeit auch bei hohen Temperaturen kann z.B. durch Zusatz von Vernetzern mit freien Isocyanatgruppen erreicht werden.

Beispiele

Beispiel 1

Eine Mischung aus 34,8 g 2,4-Diisocyanatotoluol (0,2 mol), 8,7 g 2,6-Diisocyanatotoluol (0,05 mol), 200 g Polypropylenglykol (OHZ 56, 0,1 mol), 20,1 g Dimethylolpropionsäure (0,15 mol) und 0,1 g Dibutylzinndilaurat wurde während 5 h bei 95°C umgesetzt. Anschließend wurde auf 30°C abgekühlt und der Gehalt an nicht umgesetzten NCO-Gruppen zu 0,141 Gew.-%, bezogen auf das erhaltene Polyurethan, bestimmt. Danach wurde mit 200 g Aceton verdünnt und 10,1 g Triethylamin (0,10 mol) sowie 410 g Wasser eingerührt. Der Harnstoffgruppengehalt betrug 0,09 Gew.-%, bezogen auf das Polyurethan. Nach Destillation des Acetons wurde eine ca. 40 gew.-%ige wäßrige Polyurethan-Dispersion erhalten.

Vergleichsbeispiel 1

Eine Mischung aus 79,4 g 2,4-Diisocyanatotoluol (0,46 mol), 19,8 g 2,6-Diisocyanatotoluol (0,11 mol), 600 g Polypropylenglykol (OHZ 56, 0,30 mol), 21,5 g Dimethylolpropionsäure (0,16 mol) und 0,1 g Dibutylzinndilaurat wurde während 5 h bei 95°C umgesetzt. Anschließend wurde auf 30°C abgekühlt und der Gehalt an nicht umgesetzten NCO-Gruppen zu 1,25 Gew.-%, bezogen auf die Reaktionsmischung bestimmt. Danach wurde mit 970 g Aceton verdünnt und 11,3 g Triethylamin (0,11 mol) sowie 1100 g Wasser eingerührt. Nach Destillation des Acetons wurde eine ca. 40 gew.-%ige wäßrige Polyurethan-Dispersion erhalten. Das Polyurethan enthält 0,8 Gew.-% Harnstoff.

Herstellung von Verbundfolien

Aus unterschiedlichen Polymerfolien und einer Aluminiumfolie wurden Verbunde hergestellt und anschließend die Schälfestigkeit als Maß für die Verbundfestigkeit bestimmt.

Im einzelnen wurde auf die (im Falle der Polyolefine coronavorbehandelte) Seite der Folie die Polyurethandispersion in einer Menge von 4 g/m$^2$ mit einem 0,2 mm Rollrakel aufgetragen. Die beschichteten Folien wurden mit einem Heißluftgebläße ca. 2 Minuten getrocknet und in einer Rollenpresse bei 70°C und 6,5 bar mit einer Geschwindigkeit von 5 m/min mit einer weiteren Folie verpreßt.

Nach einer Lagerung von 7 Tagen bei Raumtemperatur wurde die Schälfestigkeit in N/cm des Folienverbundes mit einer Zugprüfmaschine bestimmt:

Tabelle

| Schälfestigkeiten in N/cm | | | | | |
|---|---|---|---|---|---|
| | PETP/PE | PA/PE | PP/PE | Alu/PE | PETP/Alu |
| Beispiel | 4,3 | 4,1 | 2,8 | 3,5 | 4,5 |
| Vergleichsbeispiel | 2,2 | 2,5 | 0,9 | 2,7 | 1,6 |

Abkürzungen:

PETB Polyethylenterephthalat
PA: Polyamid
PE: Polyethylen
PP: Polypropylen
Alu: Aluminium

Anmerkung:

Die erstgenannte Polymerfolie war beschichtet und wurde mit der unbeschichteten zweitgenannten Polymerfolie verpreßt.

Durch Behandlung mit kochendem Wasser konnten die Folienverbunde wieder getrennt werden. Die unterschiedlichen Folien können so einem getrennten Recyclingprozess zugeführt werden.

**Patentansprüche**

1. Verwendung von wäßrigen Dispersionen, enthaltend ein Polyurethan mit einem Gehalt von Harnstoffgruppen (Mg = 56 g/mol)

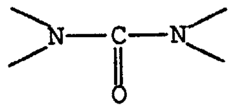

unter 0,6 Gew.-%, bezogen auf das Polyurethan, als Klebstoff.

2. Verwendung gemäß Anspruch 1, wobei das Polyurethan im wesentlichen aufgebaut ist aus

   a) organischen Diisocyanaten oder einem eine arithmetisch mittlere NCO-Funktionalität von 1,9 bis 2,3 aufweisenden Gemisch aus organischen Isocyanatverbindungen

   b) Dihydroxyverbindungen mit einem Molekulargewicht über 500 bis 5000 g/mol, welche keine ionische - oder in eine ionische Gruppe überführbare Gruppe enthalten

   c) ein- bis dreiwertigen Alkoholen, welche zusätzlich eine - ionische - oder in eine ionische Gruppe überführbare Gruppe enthalten

   d) gegebenenfalls zweiwertigen Alkoholen eines zahlenmittleren Molekulargewichtes von 62 bis 500 oder einem eine arithmetisch mittlere Funktionalität an alkoholischen OH-Gruppen von 1,9 bis 2,3 aufweisenden Gemisch aus Alkoholen eines zahlenmittleren Molekulargewichtes von 62 bis 500, welche keine ionische oder in eine ionische Gruppe überführbare Gruppe enthalten

   e) gegebenenfalls einwertigen Polyetheralkoholen.

3. Verwendung nach Anspruch 1 oder 2, wobei es sich bei Dihydroxylverbindungen b) um Polyetheralkohole handelt.

4. Verwendung nach einem der Ansprüche 1 bis 3, wobei es sich bei Verbindungen c) um Dihydroxycarbonsäuren handelt.

5. Verwendung von wäßrigen Dispersionen gemäß einem der Ansprüche 1 bis 4 als Kaschierklebstoff.

6. Verwendung von wäßrigen Dispersionen gemäß einem der Ansprüche 1 bis 4 als Verbundfolienklebstoff.

7. Verklebung, erhältlich unter Verwendung von wäßrigen Dispersionen gemäß einem der Ansprüche 1 bis 4.

**Claims**

1. Use, as an adhesive, of an aqueous dispersion containing a polyurethane which contains less than 0.6% by weight, based on the polyurethane, of urea groups (Mg = 56 g/mol)

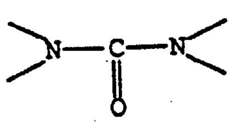

2. Use as claimed in claim 1, wherein the polyurethane is essentially composed of

   a) organic diisocyanates or a mixture of organic isocyanate compounds having an arithmetic mean NCO functionality of from 1.9 to 2.3,

b) dihydroxy compounds having a molecular weight of from more than 500 to 5,000 g/mol and containing no ionic group or group convertible into an ionic group,
c) monohydric to trihydric alcohols which additionally contain an ionic group or a group convertible into an ionic group,
d) if required, dihydric alcohols having a number average molecular weight of from 62 to 500 or a mixture of alcohols, which mixture has an arithmetic mean functionality, based on OH groups, of from 1.9 to 2.3 and a number average molecular weight of from 62 to 500 and which alcohols contain no ionic group or group convertible into an ionic group and
e) if required, monohydric polyether alcohols.

**3.** Use as claimed in claim 1 or 2, wherein dihydroxy compounds b) are polyether alcohols.

**4.** Use as claimed in any of claims 1 to 3, wherein compounds c) are dihydroxycarboxylic acids.

**5.** Use of an aqueous dispersion as claimed in any of claims 1 to 4 as a laminating adhesive.

**6.** Use of an aqueous dispersion as claimed in any of claims 1 to 4 as an adhesive for laminated films.

**7.** Adhesive bond obtainable using an aqueous dispersion as claimed in any of claims 1 to 4.

## Revendications

**1.** Utilisation en tant qu'adhésif de dispersions aqueuses, contenant un polyuréthanne avec une teneur en groupements urée (Mg = 56 g/mol)

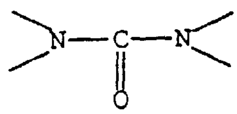

inférieure à 0,6 % en poids, par rapport au polyuréthanne.

**2.** Utilisation selon la revendication 1, où le polyuréthanne est construit principalement à partir

a) de diisocyanates organiques ou d'un mélange de composés isocyanates organiques présentant une fonctionnalité moyenne arithmétique en NCO allant de 1,9 à 2,3,
b) de composés dihydroxy ayant un poids moléculaire de plus de 500 jusqu'à 5000 g/mol, qui ne contiennent aucun groupement ionique ou pouvant se transformer en groupement ionique,
c) d'alcools mono- à trivalents, qui contiennent en plus un groupement ionique ou pouvant se transformer en un groupement ionique,
d) éventuellement d'alcools bivalents ayant un poids moléculaire moyen en nombre de 62 à 500 ou d'un mélange d'alcools ayant un poids moléculaire moyen en nombre de 62 à 500 et présentant une fonctionnalité moyenne arithmétique en groupements OH d'alcools allant de 1,9 à 2,3, lesquels ne contiennent pas de groupement ionique ou pouvant se transformer en groupement ionique,
e) éventuellement de polyétheralcools monovalents.

**3.** Utilisation selon l'une quelconque des revendications 1 et 2, où les composés dihydroxy b) sont des polyétheralcools.

**4.** Utilisation selon l'une quelconque des revendications 1 à 3, où les composés c) sont des acides carboxyliques dihydroxylés.

**5.** Utilisation de dispersions aqueuses selon l'une quelconque des revendications 1 à 4, en tant qu'adhésif pour revêtement.

6. Utilisation de dispersions aqueuses selon l'une quelconque des revendications 1 à 4, en tant qu'adhésif pour feuilles composites.

7. Collage obtenu par utilisation de dispersions aqueuses selon l'une quelconque des revendications 1 à 4.